# FASCICULE DE BREVET EUROPEEN

(11) **EP 1 232 333 B1**
(45) Date de publication et mention de la délivrance du brevet: **12.01.2005**
(21) Numéro de dépôt: 00988866.0
(22) Date de dépôt: 21.11.2000
(51) Int. Cl.: F01N 3/05

(54) **ENCHANGEUR DE CHALEUR POUR LE REFROIDISSEMENT DE GAZ D'ECHAPPEMENT D'UN VEHICULE AUTOMOBILE**
WÄRMETAUSCHER ZUM KÜHLEN DER ABGASE EINES KRAFTFAHRZEUGES
HEAT EXCHANGER FOR COOLING A MOTOR VEHICLE EXHAUST GASES

(30) Priorité: 22.11.1999 FR 9914662
(43) Date de publication de la demande: 21.08.2002
(73) Titulaire: Peugeot Citroen Automobiles SA, 92200 Neuilly sur Seine (FR)
(72) Inventeur: CLAVERIE, Patrick, F-92140 Clamart (FR); VITEL, Arnaud, F-92250 La Garenne-Colombes (FR)
(74) Mandataire: Bouget, Lucien
(86) Numéro de dépôt international: PCT/FR2000/003235
(87) Numéro de publication internationale: WO 2001/038702

(56) Documents cités:
- WO-A-89/11024
- FR-A- 617 828
- FR-A- 783 570
- GB-A- 1 377 501
- US-A- 3 605 389

## Description

L'invention concerne un échangeur de chaleur pour le refroidissement de gaz d'échappement d'un véhicule automobile.

Il peut être nécessaire de refroidir les gaz d'échappement d'un véhicule automobile circulant dans une ligne d'échappement reliée par des tubulures d'échappement au moteur, sur laquelle peuvent être disposés, par exemple, un ou plusieurs silencieux et/ou un ou plusieurs dispositifs de traitement des gaz d'échappement.

Dans le cas d'une ligne d'échappement comportant un ou plusieurs dispositifs de traitement permettant de réaliser la dépollution des gaz d'échappement, il peut être nécessaire de refroidir les gaz en circulation, avant leur entrée dans le dispositif de traitement, afin que la température de ces gaz soit toujours parfaitement adaptée aux conditions de fonctionnement de l'unité de dépollution ou encore pour éviter une destruction ou une détérioration par effet thermique, d'un ou plusieurs composants du dispositif de traitement.

De manière plus générale, il peut être nécessaire de refroidir les gaz d'échappement d'un moteur pour éviter de détériorer des éléments constitutifs de la ligne d'échappement.

On a donc pensé à intercaler un dispositif échangeur de chaleur sur la ligne d'échappement, par exemple en amont d'une unité de dépollution des gaz d'échappement.

La solution la plus simple consiste à utiliser un simple tube de grande longueur en utilisant la conduction du tube et la convection fiée à l'écoulement de l'air autour du tube pour évacuer de l'énergie. L'inconvénient de cette solution est qu'elle peut conduire à l'utilisation de tubes de très grande longueur posant des problèmes d'implantation sous le plancher du véhicule automobile.

On ne connaissait pas jusqu'ici de dispositif échangeur de chaleur de réalisation simple et compacte, intercalé sur la ligne d'échappement d'un véhicule automobile et permettant de refroidir de manière efficace les gaz d'échappement en circulation dans la ligne d'échappement par de l'air en contact avec la paroi d'un conduit dans lequel circulent les gaz d'échappement.

Dans le FR-A-783.570, on décrit un silencieux d'une ligne d'échappement de véhicule automobile, à plusieurs corps, par exemple deux corps séparés l'un de l'autre par un espace intermédiaire et constitués chacun par un ensemble de tubes parallèles entre eux dont la section totale permet de réaliser un étranglement de la circulation de gaz d'échappement à l'intérieur du silencieux. Un tel dispositif permet de réaliser un certain refroidissement des gaz d'échappement Toutefois, la longueur du parcours des gaz dans chacun des corps du silencieux est limitée à la longueur des tubes disposés en parallèle.

Le but de l'invention est donc de proposer un échangeur de chaleur pour le refroidissement de gaz d'échappement d'un véhicule automobile, destiné à être intercalé sur une ligne d'échappement du véhicule, comportant au moins une pluralité de tubes en contact par leur paroi extérieure avec de l'air de refroidissement, dans lequel les gaz d'échappement sont amenés à circuler, comportant une enveloppe extérieure en tôle métallique, de forme sensiblement cylindrique, ayant une paroi latérale traversée par des ouvertures, dans laquelle des tubes de la pluralité de tubes sont fixés par des moyens de maintien dans des dispositions sensiblement parallèles, à l'intérieur de l'enveloppe, une conduite d'arrivée de gaz d'échappement dans l'enveloppe de l'échangeur de chaleur, reliée à la ligne d'échappement en amont de l'échangeur de chaleur, une conduite d'évacuation de gaz d'échappement reliée à la ligne d'échappement en aval de l'échangeur de chaleur et des moyens de distribution de gaz d'échappement disposés à l'intérieur de l'enveloppe de l'échangeur de chaleur, cet échangeur de chaleur, de réalisation simple et de forme compacte, permettant d'assurer un refroidissement efficace des gaz d'échappement dont l'intensité peut être facilement ajustée.

Dans ce but, les moyens de distribution des gaz d'échappement permettant de faire passer les gaz d'échappement de la conduite d'arrivée à la conduite d'évacuation, suivant un parcours traversant successivement, dans une direction axiale, chacun des tubes de la pluralité de tubes suivant toute toute leur longueur, sont constitués par des collecteurs délimités, à l'intérieur de l'enveloppe métallique de l'échangeur de chaleur, par deux coupelles d'extrémité axiale ou coupelles externes disposées transversalement et fermant les extrémités axiales de l'enveloppe métallique de l'échangeur de chaleur et par une pluralité de coupelles intérieures disposées chacune suivant toute la section transversale interne de l'enveloppe métallique, à distance des extrémités axiales de l'enveloppe métallique de l'échangeur de chaleur et traversées chacune par au moins une ouverture de passage et de fixation d'un tube de la pluralité de tubes, chacun des tubes de la pluralité de tubes étant fixé à l'une de ses extrémités dans une première coupelle intérieure et à sa seconde extrémité dans une seconde coupelle intérieure, chacun des collecteurs étant délimité à l'intérieur de la paroi latérale de l'enveloppe métallique par une première coupelle qui peut être une coupelle extérieure ou une coupelle intérieure et par une seconde coupelle qui est une coupelle intérieure.

Afin de bien faire comprendre l'invention, on va maintenant décrire à titre d'exemple, en se référant aux figures jointes en annexe, un échangeur de chaleur suivant l'invention, utilisé sur une ligne d'échappement d'un véhicule automobile.
La figure 1 est une vue en élévation latérale d'une partie d'une ligne d'échappement d'un véhicule automobile comportant un échangeur de chaleur suivant l'invention.
La figure 2 est une vue en perspective de l'échangeur de chaleur suivant l'invention.
La figure 3 est une vue en coupe axiale de l'échangeur de chaleur.
Les figures 4A, 4B, 4C, 4D, 4E et 4F sont des sections de l'échangeur, respectivement suivant 4A, 4B, 4C, 4D, 4E et 4F de la figure 3.

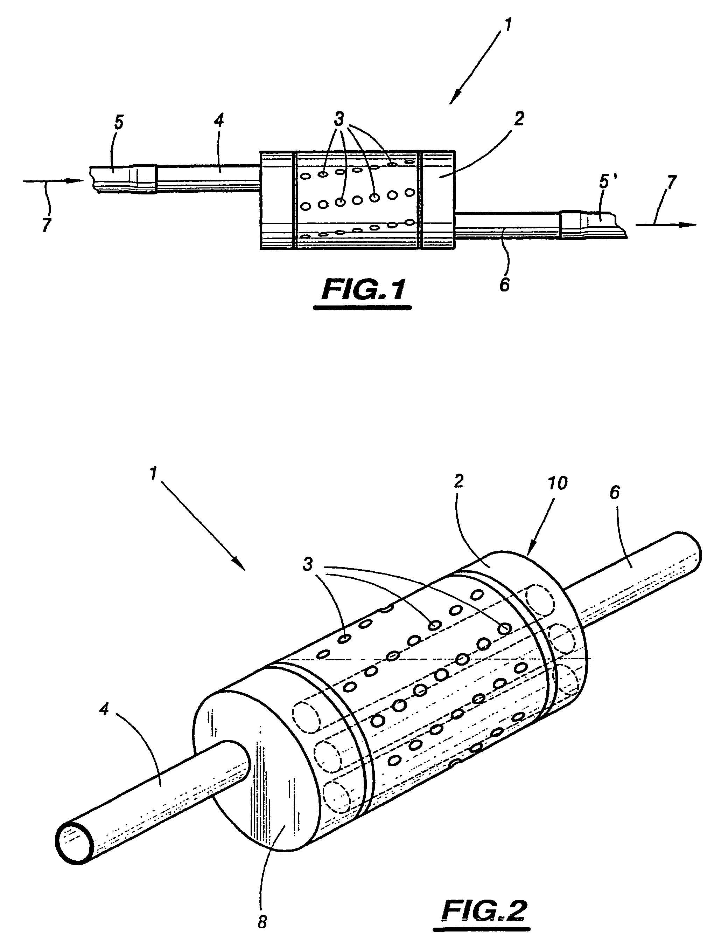

Sur la figure 1, on a représenté l'échangeur de chaleur suivant l'invention désigné de manière générale par le repère 1 qui comporte une enveloppe 2 en tôle métallique dont la paroi latérale est traversée sur une partie de sa longueur par des ouvertures 3, une conduite d'arrivée de gaz d'échappement 4 reliée à une partie 5 de la ligne d'échappement d'un véhicule automobile en amont de l'échangeur de chaleur 1 en considérant le sens de circulation des gaz d'échappement dans la ligne donnée par les flèches 7 et une conduite 6 d'évacuation des gaz d'échappement reliée à une partie 5' de la ligne d'échappement du véhicule automobile en aval de l'échangeur de chaleur 1, en considérant le sens de circulation des gaz donné par les flèches 7.

La partie amont 5 de la ligne d'échappement, qui est reliée à l'une de ses extrémités à la conduite d'arrivée 4 des gaz d'échappement dans l'enveloppe 2 de l'échangeur de chaleur 1, comporte une seconde extrémité qui est reliée aux tubulures d'échappement du moteur du véhicule automobile.

La partie aval 5' de la ligne d'échappement peut être reliée par exemple à un ou plusieurs silencieux et/ou à un dispositif de traitement de dépollution des gaz d'échappement.

L'échangeur de chaleur 1, qui est intercalé entre les parties 5 et 5' de la ligne d'échappement du véhicule automobile, doit pouvoir être logé facilement sous le plancher ou dans un sous-plancher d'un véhicule automobile.

De ce fait, l'enveloppe en tôle métallique 2 de l'échangeur de chaleur 1 doit présenter une forme compacte et des dimensions les plus réduites possibles.

L'échangeur de chaleur selon l'invention, qui sera décrit plus en détail en se référant à l'ensemble des figures, permet de loger dans une enveloppe métallique compacte des moyens assurant une circulation des gaz à l'intérieur de l'enveloppe en contact thermique avec de l'air de refroidissement, suivant un parcours de grande longueur. On peut ainsi obtenir un refroidissement très efficace des gaz entre la partie amont et la partie aval de la ligne d'échappement.

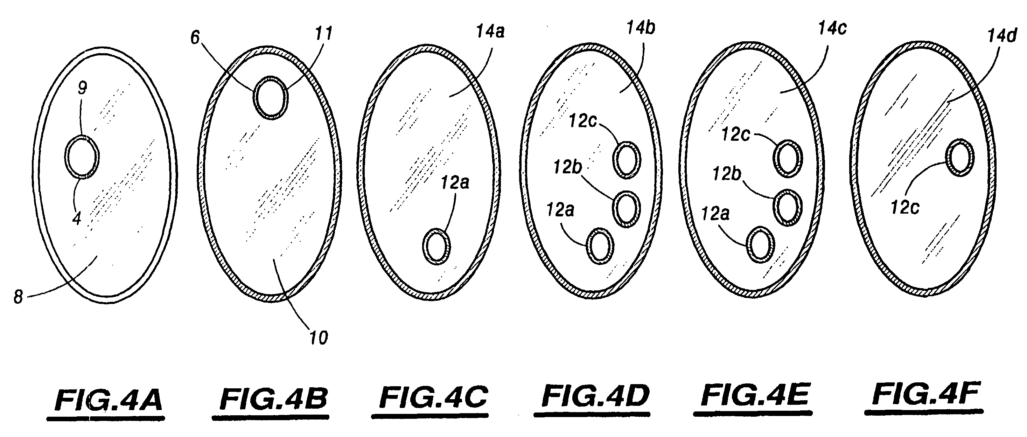

Comme il est visible en particulier sur la figure 2 et sur les figures 4A à 4F, l'enveloppe métallique 2 de l'échangeur de chaleur 1 présente la forme générale d'un cylindre ayant une section transversale oblongue, par exemple une section de forme sensiblement elliptique. L'enveloppe de l'échangeur de chaleur 1 présente en fait une forme et des dimensions analogues à celles de l'enveloppe métallique d'un silencieux d'une ligne d'échappement d'un véhicule automobile, de type classique. Cette forme qui peut être complexe, dans certains cas, doit permettre de loger facilement l'échangeur suivant l'invention dans le sous-plancher d'un véhicule automobile.

L'enveloppe en tôle métallique 2 comporte une paroi latérale qui est fermée à son extrémité amont par une première plaque métallique de forme sensiblement elliptique 8 fixée par sertissage suivant un rebord externe sur l'extrémité amont de la paroi latérale de l'enveloppe métallique 2. La plaque métallique 8, qui constitue une première coupelle extérieure de l'enveloppe métallique 2, est traversée par une ouverture qui peut être circulaire ou oblongue 9 dans laquelle est engagée et fixée par sertissage ou soudage une extrémité du conduit d'arrivée de gaz d'échappement 4 dont la section de forme correspondant à l'ouverture a été représentée sur la figure 4A.

L'enveloppe métallique 2 comporte également une seconde paroi métallique d'extrémité aval 10 de forme oblongue qui est fixée par sertissage, suivant un rebord externe, sur la partie d'extrémité aval de la paroi latérale en tôle métallique de l'enveloppe 2 de l'échangeur de chaleur.

La forme de la section transversale de l'enveloppe métallique 2 et donc des parois d'extrémité est généralement oblongue. Toutefois, dans certains cas, suivant la place disponible sous le plancher du véhicule, il peut être nécessaire de recourir à des formes plus complexes.

La paroi d'extrémité aval 10, ou coupelle extérieure aval 10, de l'enveloppe métallique est traversée par une ouverture 11 qui peut être circulaire ou éventuellement oblongue dans laquelle est fixée la conduite d'évacuation 6 des gaz d'échappement.

A l'intérieur de l'enveloppe en tôle métallique 2 de l'échangeur de chaleur 1, la circulation des gaz est canalisée par des tubes 12a, 12b et 12c dont les sections ont été représentées sur les figures 4C à 4F.

Dans le cas du mode de réalisation de l'échangeur de chaleur selon l'invention qui a été représenté sur les figures, on utilise trois tubes de circulation des gaz d'échappement mais il serait possible, comme il sera expliqué par la suite, d'utiliser un nombre de tubes supérieur.

Les tubes 12a, 12b et 12c sont fixés à l'intérieur de l'enveloppe 2, dans des dispositions parallèles, par l'intermédiaire de coupelles intérieures 14a, 14b, 14c et 14d disposées suivant la section transversale interne de l'enveloppe en tôle métallique 2.

Chacune des coupelles 14a, 14b, 14c, 14d est constituée par une plaque en tôle métallique ayant la forme de la section de l'enveloppe 2 et comportant un bord respectif 13a, 13b, 13c ou 13d replié à 90° par rapport au plan de la plaque métallique, par l'intermédiaire duquel la coupelle est rapportée et fixée par sertissage ou soudage à l'intérieur de l'enveloppe en tôle métallique 2.

Une première coupelle intérieure 14a et une seconde coupelle intérieure 14b sont disposées l'une à la suite de l'autre dans la direction de circulation des gaz d'échappement, dans une partie d'entrée ou partie amont de l'enveloppe métallique 2.

Une troisième coupelle intérieure 14c et une quatrième coupelle intérieure 14d sont disposées successivement dans le sens de circulation des gaz, dans une partie aval de l'enveloppe métallique 2 fermée par la coupelle extérieure 10.

Les ouvertures 3 traversant la paroi latérale de l'enveloppe en tôle métallique 2 sont réparties sur la paroi latérale, dans une partie centrale de la paroi latérale, entre sa partie amont et sa partie aval, c'est-à-dire entre la seconde et la troisième coupelles intérieures 14b, 14c.

La première coupelle extérieure, ou coupelle amont 8, délimite, avec la première coupelle intérieure 14a, un premier collecteur 15a. La première et la seconde coupelles intérieures 14a, 14b délimitent entre elles un second collecteur 15b. La troisième et la quatrième coupelles intérieures 14c et 14d délimitent entre elles un troisième collecteur 15c. Enfin, la quatrième coupelle intérieure 14d et la seconde coupelle extérieure, ou coupelle aval 10, délimitent entre elles un quatrième collecteur 15d.

Comme il est visible sur les figures 4C, 4D, 4E et 4F, les coupelles intérieures 14a, 14b, 14c et 14d sont traversées par des ouvertures de fixation des extrémités des tubes 12a, 12b et 12c de canalisation des gaz d'échappement.

Les coupelles intérieures 14a,14b et 14c comportent chacune une ouverture de traversée et de fixation du tube 12a. Chacune des coupelles intérieures 14b et 14c comporte des ouvertures de traversée et de fixation du tube 12b.

Enfin, chacune des coupelles intérieures 14b,14c et 14d comporte une ouverture de traversée et de fixation du tube 12c.

Les tubes 12a, 12b et12c sont engagés et fixés par leur partie d'extrémité dans les coupelles intérieures, de manière que le premier tube 12a débouche à l'une de ses extrémités dans le collecteur 15a, dans lequel débouche également la conduite d'arrivée de gaz d'échappement 4 et, à son autre extrémité, dans le collecteur 15c.

Le second tube 12b débouche, à l'une de ses extrémités, dans le collecteur 15b et, à son autre extrémité, dans le collecteur 15c.

Enfin, le troisième tube 12c communique, par l'une de ses extrémités, avec le collecteur 15b et, par sa seconde extrémité, avec le collecteur 15d dans lequel débouche également la conduite d'évacuation 6 des gaz d'échappement refroidis.

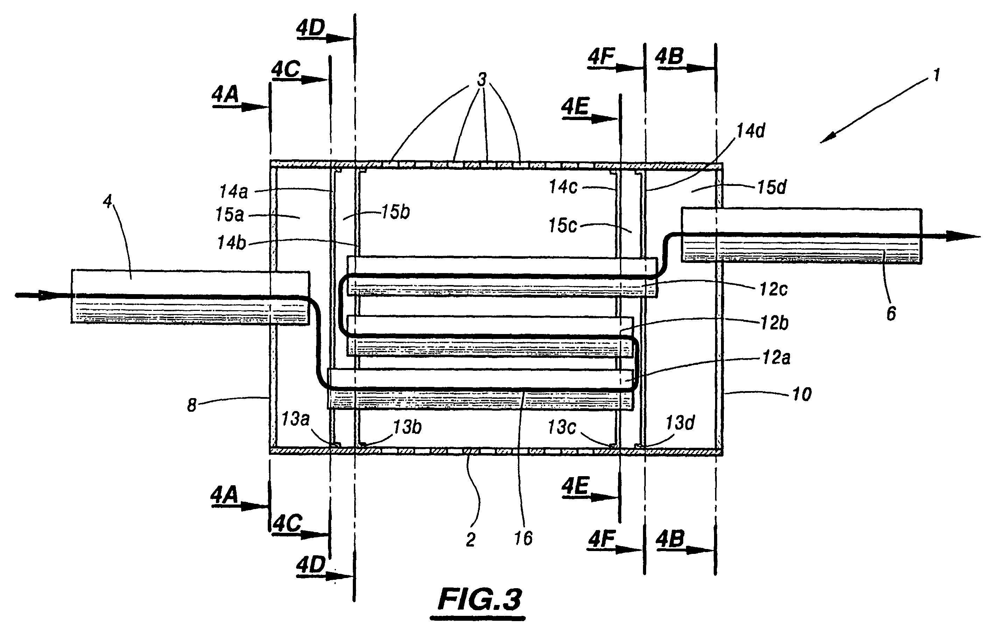

Sur la figure 3, on a représenté, sous la forme d'une ligne 16 en zigzag et de flèches, le parcours des gaz d'échappement à l'intérieur de l'enveloppe métallique 2 de l'échangeur de chaleur, entre la conduite d'arrivée de gaz 4 et la conduite d'évacuation des gaz d'échappement refroidis 6.

On voit que les gaz d'échappement chauds amenés par la conduite d'arrivée 14 dans le premier collecteur 15a traversent, successivement, les tubes 12a, 12b et 12c, dans la direction axiale et suivant toute leur longueur, les gaz d'échappement passant du premier au second tubes à l'intérieur du troisième collecteur 15c et du second au troisième tubes 12b, 12c, à l'intérieur du second collecteur 15b.

Les gaz circulent alternativement, dans un sens et dans l'autre, suivant la direction axiale des tubes qui sont eux-mêmes sensiblement parallèles à la direction axiale de l'enveloppe cylindrique 2 de l'échangeur de chaleur 1.

Entre la seconde coupelle intérieure 14b et la troisième coupelle intérieure 14c, la paroi latérale des tubes 12a, 12b et 12c est en contact avec de l'air atmosphérique qui pénètre dans l'enveloppe 2 de l'échangeur de chaleur par les ouvertures 3 et qui circule par convection, à l'intérieur de la partie centrale de l'enveloppe 2, au contact de la surface externe des tubes.

Les gaz d'échappement en circulation à l'intérieur des tubes sont donc refroidis par échange thermique avec l'air atmosphérique en circulation.

Le parcours des gaz dans la partie centrale de l'échangeur de chaleur, en contact thermique avec l'air de refroidissement, présente une longueur seulement un peu inférieure au triple de la longueur de l'enveloppe métallique 2, la première zone d'extrémité (amont) de l'enveloppe entre les coupelles 8 et 14b et la seconde zone d'extrémité (aval) entre les coupelles 14c et 10 pouvant présenter une longueur faible dans la direction axiale.

Bien entendu, les gaz d'échappement sont totalement séparés de l'air de refroidissement ; les coupelles et l'enveloppe métallique dépourvue d'ouvertures dans ses zones d'extrémité assurent une fermeture totalement étanche des collecteurs ; les tubes sont fixés à leurs extrémités de manière étanche dans les ouvertures traversant les coupelles intérieures. Dans la zone centrale balayée par l'air de refroidissement de l'enveloppe métallique 2, la paroi d'échange thermique des tubes ne présente aucune ouverture.

Le dispositif selon l'invention permet donc de faire circuler les gaz d'échappement de manière séparée mais en contact thermique avec de l'air de refroidissement suivant un parcours d'une longueur sensiblement plus grande que la longueur de l'échangeur de chaleur, dans la direction de la ligne d'échappement.

Dans le cas d'un échangeur de chaleur comportant trois tubes internes, comme il vient d'être décrit, la longueur du parcours des gaz n'est qu'un peu inférieure à trois fois la longueur de l'échangeur de chaleur.

De manière plus générale, il serait possible d'envisager l'utilisation d'un nombre n quelconque de tubes permettant d'obtenir un parcours des gaz d'échappement en contact avec l'air de refroidissement d'une longueur qui n'est qu'un peu inférieure à n fois la longueur de l'échangeur de chaleur.

Dans tous les cas, il est nécessaire de prévoir un collecteur amont d'arrivée des gaz, un collecteur aval d'évacuation des gaz et des collecteurs intermédiaires en nombre suffisant pour assurer le passage des gaz d'échappement successivement dans chacun des tubes de l'échangeur de chaleur.

Pour obtenir ces passages successifs des gaz dans n tubes de l'échangeur, il est nécessaire d'utiliser n-1 collecteurs de distribution intermédiaire.

En définitive, pour un échangeur de chaleur à n tubes, il est nécessaire de prévoir 2 + n-1 = n+1 collecteurs de distribution.

Pour constituer n-1 collecteurs intermédiaires, il est d'autre part nécessaire de prévoir n+1 coupelles intérieures, au moins dans le cas où n est impair, ce qui correspond aux modes de réalisation les plus intéressants, dans la mesure où les gaz d'échappement refroidis parviennent ainsi directement à l'extrémité de sortie de l'enveloppe de l'échangeur de chaleur.

Les différentes parties de l'échangeur de chaleur, à savoir l'enveloppe en tôle métallique, la conduite d'arrivée et la conduite d'évacuation de gaz d'échappement, les tubes de circulation des gaz et les coupelles peuvent être réalisés en tout matériau métallique présentant une bonne résistance à la corrosion à chaud par les gaz d'échappement et par l'air de refroidissement. Ces éléments peuvent être réalisés par exemple en acier aluminié, en acier inoxydable ou en un alliage de nickel renfermant du chrome.

Du fait que les éléments constitutifs de l'échangeur de chaleur sont des éléments de type classique, dans le cas de la fabrication des composants des lignes d'échappement, et que les procédés de formage et d'assemblage de ces éléments, par exemple par sertissage ou par soudage, sont des procédés bien maîtrisés et éprouvés dans le cas de fabrication des lignes d'échappement, l'échangeur de chaleur suivant l'invention peut être fabriqué pour un prix de revient raisonnable et dans de bonnes conditions de fiabilité, sur des lignes de fabrication classiques.

De plus, le dispositif suivant l'invention permet de réaliser un refroidissement efficace des gaz d'échappement qui peut être de grande amplitude, tout en utilisant un échangeur de chaleur de forme extrêmement compacte qui peut être facilement logé dans la ligne d'échappement d'un véhicule automobile, par exemple dans un sous-plancher du véhicule. Pour augmenter la capacité de refroidissement de l'échangeur de chaleur, on peut accroître la longueur du parcours des gaz, en utilisant un nombre accru de tubes disposés dans l'enveloppe en tôle métallique de l'échangeur de chaleur. La seule limitation au nombre de tubes permettant d'augmenter la longueur du parcours des gaz d'échappement est imposée par le nombre de tubes maximal qu'on peut fixer à l'intérieur de l'enveloppe (dont la section est limitée pour pouvoir loger l'échangeur de chaleur sous le plancher du véhicule automobile). Les tubes constituant le parcours des gaz d'échappement doivent présenter une section minimale et être espacés les uns des autres dans la section de l'enveloppe métallique de manière à permettre la circulation de l'air pénétrant dans l'enveloppe métallique par les ouvertures de sa paroi latérale et circulant par convection à l'intérieur de l'enveloppe métallique au contact des tubes.

Il est possible également d'augmenter la capacité de refroidissement de l'échangeur de chaleur, en augmentant le nombre et/ou le diamètre des trous de l'enveloppe, ce qui a pour effet d'intensifier la circulation par convection de l'air autour des tubes.

L'invention ne se limite pas strictement au mode de réalisation qui a été décrit.

C'est ainsi que, comme on l'a indiqué plus haut, qu'on peut utiliser un nombre de tubes supérieur à trois pour constituer le parcours des gaz dans l'échangeur de chaleur, ce nombre n de tubes pouvant être de préférence impair.

On peut également prévoir des coupelles complémentaires, par exemple pour améliorer la tenue mécanique de l'échangeur ; en particulier, des coupelles complémentaires peuvent être utilisées pour assurer un meilleur maintien des tubes d'entrée et de sortie. Il peut être utile également d'adjoindre un ou plusieurs soufflets à un ou plusieurs tubes pour compenser la dilatation thermique différentielle des tubes, ce qui améliore également la tenue du dispositif.

On peut utiliser, pour faire passer les gaz d'échappement d'un tube au suivant, dans le sens du parcours des gaz, des collecteurs ayant des formes différentes de celles qui ont été décrites, ces collecteurs étant délimités par des parois différentes de coupelles. Comme indiqué plus haut, l'utilisation de coupelles permet de rester dans le cadre d'une fabrication classique d'un élément d'une ligne d'échappement de véhicule automobile. On pourrait utiliser éventuellement des collecteurs ou des déflecteurs courbes joignant tes extrémités des tubes à l'intérieur de l'enveloppe ou toute autre forme de collecteur ou de dispositif de déviation des gaz d'échappement.

L'enveloppe extérieure en tôle métallique de l'échangeur de chaleur peut être réalisée par emboutissage, notamment par emboutissage de deux demi-coquilles qui sont ensuite assemblées.

L'échangeur de chaleur suivant l'invention peut être intercalé sur une ligne d'échappement de véhicule automobile, en un endroit quelconque où il est nécessaire de refroidir les gaz d'échappement sortant des tubulures du moteur du véhicule automobile. De préférence, l'échangeur de chaleur suivant l'invention peut être placé en amont d'un dispositif de traitement des gaz, par exemple un dispositif de dépollution par oxydation catalysée des gaz d'échappement.

L'invention s'applique à tout type de véhicule automobile dont il est nécessaire d'abaisser la température des gaz d'échappement, en un endroit quelconque d'une ligne d'échappement du véhicule.

## Revendications

1. Echangeur de chaleur pour le refroidissement de gaz d'échappement d'un véhicule automobile, destiné à être intercalé sur une ligne d'échappement du véhicule, comportant au moins une pluralité de tubes (12a, 12b, 12c) en contact par sa paroi extérieure avec de l'air de refroidissement, dans lequel les gaz d'échappement sont amenés à circuler, comportant une enveloppe extérieure (2) en tôle métallique, de forme sensiblement cylindrique, ayant une paroi latérale traversée par des ouvertures (3), dans laquelle des tubes de la pluralité de tubes (12a,12b, 12c) sont fixés par des moyens de maintien (14a, 14b, 14c, 14d) dans des dispositions sensiblement parallèles, à intérieur de l'enveloppe (2), une conduite (4) d'arrivée de gaz d'échappement dans l'enveloppe (2) de l'échangeur de chaleur (1), reliée à la ligne d'échappement (5, 5') en amont de l'échangeur de chaleur (1), une conduite d'évacuation de gaz d'échappement (6) reliée à la ligne d'échappement (5, 5') en aval de l'échangeur de chaleur (1) et des moyens de distribution de gaz d'échappement (15a, 15b, 15c, 15d) disposés à l'intérieur de l'enveloppe (2) de l'échangeur de chaleur (1), **caractérisé par le fait que** les moyens de distribution (15a, 15b, 15c, 15d) des gaz d'échappement permettant de faire passer les gaz d'échappement de la conduite d'arrivée (4) à la conduite d'évacuation (6), suivant un parcours traversant successivement, dans une direction axiale, chacun des tubes de la pluralité de tubes (12a, 12b, 12c) suivant toute leur longueur, sont constitués par des collecteurs délimités, à l'intérieur de l'enveloppe métallique (2) de l'échangeur de chaleur (1), par deux coupelles d'extrémité axiale ou coupelles externes (8, 10) disposées transversalement et fermant les extrémités axiales de l'enveloppe métallique (2) de l'échangeur de chaleur (1) et par une pluralité de coupelles intérieures (14a, 14b, 14c, 14d) disposées chacune suivant toute la section transversale interne de l'enveloppe métallique (2), à distance des extrémités axiales de l'enveloppe métallique (2) de l'échangeur de chaleur (1) et traversées chacune par au moins une ouverture de passage et de fixation d'un tube de la pluralité de tubes, chacun des tubes de la pluralité de tubes (12a, 12b, 12c) étant fixé à l'une de ses extrémités dans une première coupelle intérieure et à sa seconde extrémité dans une seconde coupelle intérieure, chacun des collecteurs (15a, 15b, 15c, 15d) étant délimité à l'intérieur de la paroi latérale de l'enveloppe métallique (2) par une première coupelle qui peut être une coupelle extérieure ou une coupelle intérieure et par une seconde coupelle qui est une coupelle intérieure.

2. Echangeur de chaleur suivant la revendication 1, **caractérisé par le fait que** la pluralité de tubes (12a,12b,12c) comporte trois tubes (12a, 12b, 12c) et quatre collecteurs (15a, 15b, 15c, 15d) délimités dans l'enveloppe métallique (2) de l'échangeur de chaleur, un premier collecteur (15a) étant délimité entre une coupelle extérieure (8) traversée par la conduite d'arrivée (4) de gaz d'échappement débouchant dans le collecteur (15a) et par une première coupelle intérieure (14a), un second collecteur (15b) étant délimité entre une première coupelle intérieure (14a) et une seconde coupelle intérieure (14b) disposées dans une première zone d'extrémité de l'enveloppe métallique (2) du côté de la conduite (4) d'arrivée des gaz d'échappement, un troisième collecteur (15c) délimité entre une troisième coupelle intérieure (14c) et une quatrième coupelle intérieure (14d), dans une seconde zone d'extrémité de l'enveloppe métallique (2) du côté de la conduite de sortie (6) des gaz d'échappement et un quatrième collecteur (15d) délimité par une quatrième coupelle intérieure (14d) et la seconde coupelle extérieure (10) traversée par la conduite de sortie de gaz d'échappement (6), un premier tube (12a) de la pluralité de tubes (12a, 12b, 12c) traversant, à l'une de ses extrémités, la première coupelle (14a) et la seconde coupelle (14b) et, à son autre extrémité, la troisième coupelle intérieure (14c), de manière à déboucher, à l'une de ses extrémités, dans le premier collecteur (15a) et, à sa seconde extrémité, dans le troisième collecteur (15c), un deuxième tube (12b) de la pluralité de tubes (12a, 12b, 12c) traversant à l'une de ses extrémités axiales la seconde coupelle intérieure (14b) et, à sa seconde extrémité axiale, la troisième coupelle intérieure (14c), de manière à déboucher, à sa première extrémité, dans le second collecteur (15b) et, à sa seconde extrémité, dans le troisième collecteur (15c), le troisième tube (12c) de l'ensemble de tubes (12a, 12b, 12c) traversant, à l'une de ses extrémités, la seconde coupelle intérieure (14b) et, à sa seconde extrémité axiale, la troisième coupelle intérieure (14c) et la quatrième coupelle intérieure (14d), de manière à déboucher, à l'une de ses extrémités, dans le second collecteur (15b) et, à sa seconde extrémité, dans le quatrième collecteur (15d).

3. Echangeur de chaleur suivant la revendication 2, **caractérisé par le fait que** les ouvertures (3) dans la paroi latérale de l'enveloppe métallique (2) de l'échangeur de chaleur (1) sont situées entre la deuxième et la troisième coupelles intérieures (14b, 14c), les première et seconde zones d'extrémité de l'enveloppe métallique (2) de l'échangeur de chaleur (1) ne comportant aucune ouverture.

4. Echangeur de chaleur suivant la revendication 1, **caractérisé par le fait que** la pluralité de tubes (12a, 12b, 12c) comporte n tubes, n étant impair, n+1 collecteurs (15a, 15b, 15c, 15d) délimités par deux coupelles extérieures d'extrémité axiale (8, 10) de l'enveloppe métallique (2) et n+1 coupelles intérieures (14a, 14b, 14c, 14d).

5. Echangeur de chaleur suivant l'une quelconque des revendications 1 à 4, **caractérisé par le fait que** la section transversale de l'enveloppe métallique (2), les coupelles extérieures (8, 10) et les coupelles intérieures (14a, 14b, 14c, 14d) réalisées en tôle métallique plane présentent une forme oblongue, par exemple elliptique, ou plus complexe pour permettre de loger l'échangeur de chaleur (1) sous un plancher de véhicule automobile.

6. Echangeur de chaleur suivant la revendication 5, **caractérisé par le fait que** les conduites (4) d'arrivée de gaz d'échappement et (6) d'évacuation des gaz d'échappement et les tubes (12a, 12b, 12c) de la pluralité de tubes présentent une section transversale circulaire ou oblongue et par exemple elliptique, les ouvertures traversant les coupelles extérieures (8, 10) et intérieures (14a, 14b, 14c, 14d) ayant une forme analogue, pour l'engagement pratiquement sans jeu des conduits (4, 6) et des tubes de la pluralité de tubes (12a, 12b, 12c).

7. Echangeur de chaleur suivant la revendication 1, **caractérisé par le fait que** l'enveloppe extérieure (2) en tôle métallique est réalisée par emboutissage et notamment par emboutissage et assemblage de deux demi-coquilles.

8. Echangeur de chaleur suivant l'une quelconque des revendications 1 à 7, **caractérisé par le fait qu'**au moins un soufflet est adjoint à l'un au moins des tubes (12a, 12b, 12c) pour compenser des dilatations thermiques différentielles des tubes (12a, 12b, 12c).

## Claims

1. Heat exchanger for cooling exhaust gas of an automotive vehicle, intended to be interposed on an exhaust line of the vehicle, comprising at least a plurality of tubes (12a, 12b, 12c) in contact by its outer wall with cooling air in which the exhaust gases are circulated, comprising an outer, sheet metal casing (2), of substantially cylindrical shape, having a side wall passed through by openings (3), in which tubes of the plurality of tubes (12a, 12b, 12c) are fixed by holding means (14a, 14b, 14c, 14d) in substantially parallel arrangements inside the casing (2), an exhaust-gas feed pipe (4) in the casing (2) of the heat exchanger (1), connected to the exhaust line (5, 5') upstream of the heat exchanger (1), an exhaust-gas discharge pipe (6) connected to the exhaust line (5, 5') downstream of the heat exchanger (1), and exhaust-gas distribution means (15a, 15b, 15c, 15d) disposed inside the casing (2) of the heat exchanger (1), **characterized in that** the exhaust-gas distribution means (15a, 15b, 15c, 15d), by which the exhaust gases can be passed from the feed pipe (4) to the discharge pipe (6) along a path passing successively, in an axial direction, through each of the tubes of the plurality of tubes (12a, 12b, 12c) along the whole of their length, are constituted by headers delimited, inside the metal casing (2) of the heat exchanger (1), by two axial-end caps or outer caps (8, 10), disposed transversely and closing the axial ends of the metal casing (2) of the heat exchanger (1), and by a plurality of inner caps (14a, 14b, 14c, 14d), each disposed along the whole of the internal cross section of the metal casing (2), at a distance from the axial ends of the metal casing (2) of the heat exchanger (1), and each passed through by at least one pass-through and fastening opening for a tube of the plurality of tubes, each of the tubes of the plurality of tubes (12a, 12b, 12c) being fixed at one of its ends in a first inner cap and at its second end in a second inner cap, each of the headers (15a, 15b, 15c, 15d) being delimited inside the side wall of the metal casing (2) by a first cap, which can be an outer cap or an inner cap, and by a second cap, which is an inner cap.

2. Heat exchanger according to Claim 1, **characterized in that** the plurality of tubes (12a, 12b, 12c) comprises three tubes (12a, 12b, 12c) and four headers (15a, 15b, 15c, 15d) delimited in the metal casing (2) of the heat exchanger, a first header (15a) being delimited between an outer cap (8) passed through by the exhaust-gas feed pipe (4), emerging in the header (15a), and by a first inner cap (14a), a second header (15b) being delimited between a first inner cap (14a) and a second inner cap (14b) disposed in a first end zone of the metal casing (2) on the side of the exhaust-gas feed pipe (4), a third header (15c) being delimited between a third inner cap (14c) and a fourth inner cap (14d), in a second end zone of the metal casing (2) on the side of the exhaust-gas outlet pipe (6), and a fourth header (15d) being delimited by a fourth inner cap (14d) and the second outer cap (10) passed through by the exhaust gas outlet pipe (6), a first tube (12a) of the plurality of tubes (12a, 12b, 12c) passing, at one of its ends, through the first cap (14a) and the second cap (14b) and, at its other end, through the third inner cap (14c), in such a way as to emerge, at one of its ends, in the first header (15a) and, at its second end, in the third header (15c), a second tube (12b) of the plurality of tubes (12a, 12b, 12c) passing, at one of its axial ends, through the second inner cap (14b) and, at its second axial end, through the third inner cap (14c), in such a way as to emerge, at its first end, in the second header (15b) and, at its second end, in the third header (15c), the third tube (12c) of the assembly of tubes (12a, 12b, 12c) passing, at one of its ends, through the second inner cap (14b) and, at its second axial end, through the third inner cap (14c) and the fourth inner cap (14d), in such a way as to emerge, at one of its ends, in the second header (15b) and, at its second end, in the fourth header (15d).

3. Heat exchanger according to Claim 2, **characterized in that** the openings (3) in the side wall of the metal casing (2) of the heat exchanger (1) are situated between the second and third inner caps (14b, 14c), the first and second end zones of the metal casing (2) of the heat exchanger (1) not containing any opening.

4. Heat exchanger according to Claim 1, **characterized in that** the plurality of tubes (12a, 12b, 12c) comprises n tubes, n being an odd number, n+1 headers (15a, 15b, 15c, 15d) delimited by two outer caps (8, 10) of the axial end of the metal casing (2), and n+1 inner caps (14a, 14b, 14c, 14d).

5. Heat exchanger according to any one of Claims 1 to 4, **characterized in that** the cross section of the metal casing (2), the outer caps (8, 10) and the inner caps (14a, 14b, 14c, 14d) made of plane sheet metal have an oblong, for example elliptical, or more complex shape to allow the heat exchanger (1) to be accommodated beneath an automotive vehicle floor.

6. Heat exchanger according to Claim 5, **characterized in that** the exhaust-gas feed pipes (4) and exhaust-gas discharge pipes (6) and the tubes (12a, 12b, 12c) of the plurality of tubes have a circular or oblong and, for example, elliptical cross section, the openings passing through the outer (8, 10) and inner (14a, 14b, 14c, 14d) caps having a similar shape, for the virtually play-free engagement of the pipes (4, 6) and of the tubes of the plurality of tubes (12a, 12b, 12c).

7. Heat exchanger according to Claim 1, **characterized in that** the sheet metal outer casing (2) is realized by deep-drawing and especially by deep-drawing and putting together of two half-shells.

8. Heat exchanger according to any one of Claims 1 to 7, **characterized in that** at least one bellows is attached to one at least of the tubes (12a, 12b, 12c) in order to compensate for differential thermal expansions of the tubes (12a, 12b, 12c).

## Patentansprüche

1. Wärmetauscher zur Kühlung des Abgases eines Kraftfahrzeugs, bestimmt zur Zwischenschaltung in der Abgasleitung des Fahrzeugs, mit wenigstens einer Anzahl von Rohren (12a, 12b, 12c) in Berührung über ihre Außenwand mit der Kühlluft, in welchem das Abgas im Umlauf geführt wird, mit einem Außenmantel (2) aus Blech im Wesentlichen zylindrischer Form, welcher eine von Öffnungen (3) durchsetzte Seitenwand aufweist, in der Rohre der Anzahl von Rohren (12a, 12b, 12c) durch Haltemittel (14a, 14b, 14c, 14d) in im wesentlichen parallelen Anordnungen im Inneren des Außenmantels (2) festgelegt sind, einer Zuführleitung (4) für das Abgas in den Mantel (2) des Wärmetauschers (1), die mit der Abgasleitung (5, 5') strömungsoberhalb des Wärmetauschers (1) verbunden ist, einer Auslassleitung für das Abgas (6), die mit der Abgasleitung (5, 5') strömungsunterhalb des Wärmetauschers (1) verbunden ist, und Verteilungsmitteln für das Abgas (15a, 15b, 15c, 15d), die Inneren des Mantels (2) des Wärmetauschers (1) angeordnet sind, **dadurch gekennzeichnet, dass** die Verteilungsmittel (15a, 15b, 15c, 15d) für das Abgas, die es gestatten, das Abgas von der Zuführleitung (4) zur Auslassleitung (6) längs eines Weges durchzulassen, der nacheinander in axialer Richtung jedes der Rohre der Anzahl von Rohren (12a, 12b, 12c) längs ihrer gesamten Länge durchsetzt, durch Sammler gebildet sind, die im Inneren des Metallmantels (2) des Wärmetauschers (1) durch zwei axiale Endschalen bzw. Außenschalen (8, 10), die in Querrichtung angeordnet sind und die axialen Enden des Metallmantels (2) des Wärmetauschers (1) abschließen, und durch eine Anzahl von Innenschalen (14a, 14b, 14c, 14d) bestimmt sind, die jeweils über den gesamten Innenquerschnitt des Metallmantels (2) im Abstand von den axialen Enden des Metallmantels (2) des Wärmetauschers (1) angeordnet sind und jeweils von mindestens einer Durchtritts- und Fixieröffnung für ein Rohr der Anzahl von Rohren durchsetzt sind, wobei jedes der Rohre der Anzahl von Rohren (12a, 12b, 12c) an einem seiner Enden in einer ersten Innenschale und an seinem zweiten Ende in einer zweiten Innenschale festgelegt ist, wobei jeder der Sammler (15a, 15b, 15c, 15d) innerhalb der Seitenwand des Metallmantels (2) durch eine erste Schale, die eine Außenschale oder eine Innenschale sein kann, und durch eine zweite Schale, die eine Innenschale ist, begrenzt ist.

2. Wärmetauscher nach Anspruch 1, **gekennzeichnet dadurch, dass** die Anzahl von Rohren (12a, 12b, 12c) drei Rohre (12a, 12b, 12c) aufweist, und durch vier Sammler (15a, 15b, 15c, 15d), die im Metallmantel (2) des Wärmetauschers begrenzt sind, wobei ein erster Sammler (15a) zwischen einer Außenschale (8), die von der in den Sammler (15a) mündenden Zuführleitung (4) für das Abgas durchsetzt wird, und einer ersten Innenschale (14a) begrenzt ist, ein zweiter Sammler (15b) zwischen einer ersten Innenschale (14a) und einer zweiten Innenschale (14b), die in einer ersten Endzone des Metallmantels (2) auf Seite der Abgaszuführleitung (4) angeordnet sind, begrenzt ist, ein dritter Sammler (15c) zwischen einer dritten Innenschale (14c) und einer vierten Innenschale (14d), in einer zweiten Endzone des Metallmantels (2), auf Seite der Abgasauslassleitung (6) bestimmt ist, und ein vierter Sammler (15d) durch eine vierte Innenschale (14d) und die von der Abgasauslassleitung (6) durchsetzte zweite Außenschale (10) bestimmt ist, wobei ein erstes Rohr (12a) der Anzahl von Rohren (12a, 12b, 12c) an einem seiner Enden die erste Schale (14a) und die zweite Schale (14b) und an seinem anderen Ende die dritte Innenschale (14c) durchsetzt, derart, dass es an dem einen seiner Enden im ersten Sammler (15a) und an seinem zweiten Ende im dritten Sammler (15c) mündet, wobei ein zweites Rohr (12b) der Anzahl von Rohren (12a, 12b, 12c) an dem einen seiner axialen Enden die zweite Innenschale (14b) und an seinem zweiten axialen Ende die dritte Innenschale (14c) durchsetzt, derart, dass es an seinem ersten Ende in dem zweiten Sammler (15b) und an seinem zweiten Ende in dem dritten Sammler (15c) mündet, wobei das dritte Rohr (12c) der Gesamtheit der Rohre (12a, 12b, 12c) an dem einen seiner Enden die zweite Innenschale (14b) und an seinem zweiten axialen Ende die dritte Innenschale (14c) und die vierte Innenschale (14d) durchsetzt, derart, dass es an dem einen seiner Enden im zweiten Sammler (15b) und an seinem zweiten Ende in dem vierten Sammler (15d) mündet.

3. Wärmetauscher nach Anspruch 2, **dadurch gekennzeichnet, dass** die Öffnungen (3) in der Seitenwand des Metallmantels (2) des Wärmetauschers (1) zwischen der zweiten und dritten Innenschale (14b, 14c) liegen, wobei die ersten und zweiten Endzonen des Metallmantels (2) des Wärmetauschers (1) keine Öffnung aufweisen.

4. Wärmetauscher nach Anspruch 1, **dadurch gekennzeichnet, dass** die Anzahl von Rohren (12a, 12b, 12c) n Rohre, wobei n ungerade ist, n+1 Sammler (15a, 15b, 15c, 15d), die durch zwei äußere axiale Endschalen (8, 10) des Metallmantels (2) begrenzt sind, und n+1 Innenschalen (14a, 14b, 14c, 14d) aufweist.

5. Wärmetauscher nach irgendeinem der Ansprüche 1 bis 4, **dadurch gekennzeichnet, dass** der Querschnitt des Metallmantels (2), die Außenschalen (8, 10) und die Innenschalen (14a, 14b, 14c, 14d), die aus planem Metallblech hergestellt sind, eine lang gestreckte Form, beispielsweise elliptische oder komplexere Form aufweisen, damit der Wärmetauscher (1) unter einem Wagenboden aufgenommen werden kann.

6. Wärmetauscher nach Anspruch 5, **dadurch gekennzeichnet, dass** die Abgaszuführleitung (4) und die Abgasauslassleitung (6) und die Rohre (12a, 12b, 12c) der Anzahl von Rohren kreisförmigen oder langgestreckten und beispielsweise elliptischen Querschnitt aufweisen, wobei die Öffnungen, die die Außenschalen (8, 10) und Innenschalen (14a, 14b, 14c, 14d) durchsetzen, entsprechende Form haben, um so Leitungen (4, 6) und Rohre der Anzahl von Rohren (12a, 12b, 12c) praktisch ohne Spiel zu erfassen.

7. wärmetauscher nach Anspruch 1, **dadurch gekennzeichnet, dass** der Außenmantel (2) aus Metallblech durch Tiefziehen und insbesondere durch Tiefziehen und Anbringen von zwei Halbschalen hergestellt ist.

8. Wärmetauscher nach irgendeinem der Ansprüche 1 bis 7, **dadurch gekennzeichnet, dass** wenigstens ein Gebläse wenigstens einem der Rohre (12a, 12b, 12c) zugeordnet ist, um thermische Differenzdilatationen der Rohre (12a, 12b, 12c) auszugleichen.
